Europäisches Patentamt

European Patent Office

Office européen des brevets

(19)

(11) Veröffentlichungsnummer : **0 327 702 B1**

# (12) EUROPÄISCHE PATENTSCHRIFT

(45) Veröffentlichungstag der Patentschrift :
07.09.94 Patentblatt 94/36

(51) Int. Cl.⁵ : **G02B 6/22**, G02B 6/10

(21) Anmeldenummer : 88120336.8

(22) Anmeldetag : 06.12.88

(54) **Lichtwellenleiter.**

(30) Priorität : **11.02.88 DE 3804152**

(43) Veröffentlichungstag der Anmeldung :
**16.08.89 Patentblatt 89/33**

(45) Bekanntmachung des Hinweises auf die
Patenterteilung :
**07.09.94 Patentblatt 94/36**

(84) Benannte Vertragsstaaten :
**AT CH DE ES FR GB LI NL**

(56) Entgegenhaltungen :
**EP-A- 0 260 795
US-A- 4 070 091
PATENT ABSTRACTS OF JAPAN, Band 12, Nr.
34 (P-662)(2881), 2. Februar 1988; &
JP-A-62187305**

(56) Entgegenhaltungen :
**AT & T TECHNICAL JOURNAL Band 65, Nr. 5,
September/October 1986, Seiten 105-122,
Short Hills, NJ, US ; W.A. REED et al. :
"Tailoring optical characteristics of disper-
sion-shifted lightguides for applications near
1.55 micro-meters"**

(73) Patentinhaber : **KABEL RHEYDT
Aktiengesellschaft
Bonnenbroicher Strasse 2-14
D-41238 Mönchengladbach (DE)**

(72) Erfinder : **Unger, Hans-Georg, Prof. Dr.
Wöhlerstrasse 10
D-3300 Braunschweig (DE)**
Erfinder : **Yang, Risheng
Rebenring 63/1124
D-3300 Braunschweig (DE)**

(74) Vertreter : **Mende, Eberhard, Dipl.-Ing.
c/o Alcatel Kabel Beteiligungs-AG
Kabelkamp 20
D-30179 Hannover (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Lichtwellenleiter mit einem Kern und einem Mantel, bei dem der Mantel in seinem inneren Bereich eine Brechzahlabsenkung aufweist.

Eine Brechzahlabsenkung im inneren Mantel erlaubt, mit weniger Dotierung im Kern zur Erhöhung der Kernbrechzahl auszukommen. Bei geringerer Kerndotierung sind aber auch die Verluste niedriger, welche die Grundwelle im Kern erfährt, und die Faser führt die Grundwelle mit insgesamt weniger Dämpfung.

Erhöht werden kann die Grundwellendämpfung in Faserkrümmungen, in denen Grundwellenleistung durch den Mantelbereich mit abgesenkter Brechzahl in den äußeren Mantelbereich tunnelt und durch Abstrahlung verloren geht. Es ist deshalb praktisch sehr wichtig, Möglichkeiten und Maßnahmen zu finden, mit denen sich diese Krümmumgsempfindlichkeit von Fasern mit abgesenkter Brechzahl im inneren Mantel vermindern läßt.

Bekannt ist bereits (Patent Abstracts of Japan, Bd. 12, Nr. 34 (P-662) (2882), 2.2.88) eine dispersionsverschobene oder dispersionsgelättete Faser mit einem schmalen Bereich 3. Durch geeignete Wahl der Breite und der Tiefe dieses Bereiches lassen sich die Nullstellen der Dispersion verschieben bzw. die Dispersionswerte über einen breiten Wellenbereich niedrig legen.

Der Erfindung liegt die Aufgabe zugrunde, einen Lichtwellenleiter mit einer Bechzahlabsenkung im Mantel anzugeben, bei dem Störungen, die durch Krümmungen des Lichtwellenleiters hervorgerufen werden, zumindest weitgehend gemildert werden. Diese Aufgabe wird bei einem Lichtwellenleiter der eingangs erwähnten Art nach der Erfindung durch die kennzeichnenden Merkmale des Anspruchs 1 gelöst.

Die Erfindung wird im folgenden an einem Ausführungsbeispiel erläutert.

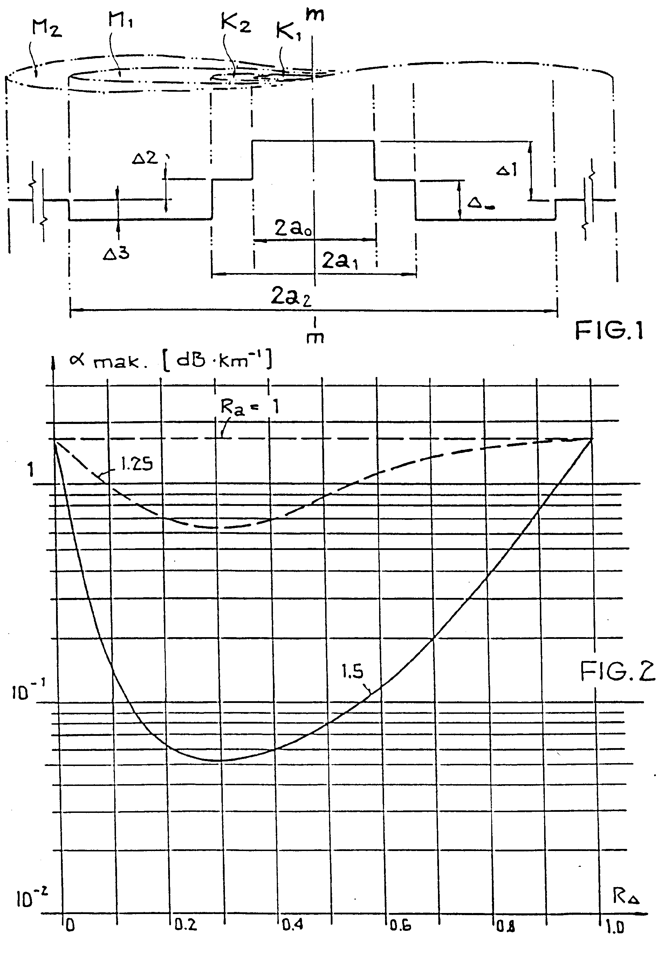

Im Ausführungsbeispiel der Figur 1 weist der Lichtwellenleiter zwei Kernbereiche $K_1$ und $K_2$ sowie zwei Mantelbereiche $M_1$ und $M_2$ auf. Die genannten Bereiche haben unterschiedliche Brechzahlen. Die Kernbereiche $K_1$ und $K_2$ ergeben einen doppelschultrigen Brechzahlverlauf. Der Kernbereich $K_1$, der symmetrisch zur Mitte m des Lichtwellenleiters angeordnet ist und einen Durchmesser von 2 $a_0$ hat, weist die höchste Brechzahl auf, die nach den in der Figur 1 verwendeten Brechzahlgrößen um $\Delta_3 + \Delta_1$ größer ist als die Brechzahl im Mantelbereich $M_1$.

An den inneren Kernbereich $K_1$ schließt sich der Kernbereich $K_2$ an, dessen Brechzahl geringer als die Brechzahl des Kernbereichs $K_1$ ist und um $\Delta_-$ größer ist als die Brechzahl im Mantelbereich $M_1$. Der Kernbereich $K_2$ hat eine Dicke von $a_1 - a_0$ und sein Abstand zur Mitte m des Lichtwellenleiters beträgt $a_0$. Im Ausführungsbeispiel der Figur 1 ist die Brechzahl im Kernbereich $K_1$ konstant. In dem sich an den Kernbereich $K_1$ anschließenden Kernbereich $K_2$ fällt die Brechzahl von einer Differenz $\Delta_3 + \Delta_1$ (im Kernbereich $K_1$) auf eine Brechzahldifferenz $\Delta_-$ gegenüber dem inneren Mantel $M_1$ zurück. Die Brechzahl bleibt im Kernbereich $K_2$ ebenfalls konstant.

An den Kernbereich $K_2$ schließt sich der Mantel mit seinen Mantelbereichen $M_1$ und $M_2$ an. Der Mantelbereich $M_1$ hat die Brechzahldifferenz $\Delta_3$ gegenüber dem Mantelbereich $M_2$. Da der Mantel einen abgesenkten Brechzahlbereich $M_1$ aufweist, spricht man von einem Mantel mit abgesenktem Brechzahlbereich. Die Dicke des Mantelbereichs $M_1$ beträgt $a_2 - a_1$.

Das Brechzahlprofil der Figur 1 kann als mathematisches Modell für eine Einmodenfaser dienen. Der erste Bereich $K_1$ des Kerns (0 - $a_0$) wird beispielsweise mit Germanium dotiert und dadurch seine Brechzahl berhöht. Der zweite Bereich $K_2$ des Kerns ($a_0 - a_1$) wird beispielsweise mit Germanium oder Fluor dotiert, je nachdem ob $\Delta_- > \Delta_3$ oder $\Delta_- < \Delta_3$ sein soll, wobei $\Delta_3$ die relative Brechzahldifferenz gegenüber dem äußeren Mantel ($M_2$) und $\Delta_-$ die relative Brechzahldifferenz zwischen dem zweiten Bereich ($K_2$) des Kerns und innerem Mantel ($M_1$) bezeichnet. Der innere Mantel ($M_1$) wird mit Fluor dotiert und dadurch seine Brechzahl abgesenkt. Der äußere Matnel ($M_2$) besteht aus reinem Quarzglas. Das Radienverhältnis $R_a$ und das Brechzahlverhältnis des Kerns $R_\Delta$ werden gemäß

$$R_a = a_1/a_0 \quad (1)$$

und

$$R_\Delta = \frac{\Delta_-}{\Delta_1 + \Delta_3} \quad (2)$$

definiert.

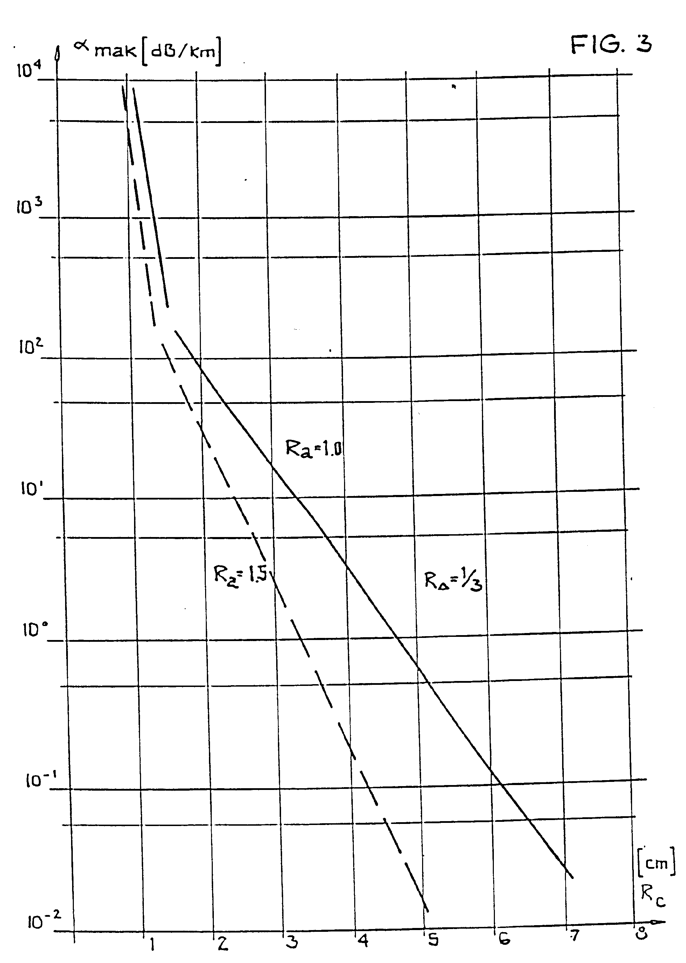

Die Figur 2 zeigt die Makrokrümmungsverluste bei $\lambda = 1,55$ µm als Funktion von $R_\Delta$ mit $R_a$ als Parameter für einen Fleckradius $W_0 = 5,05$ µm bei $\lambda = 1,55$ µm und eine Wellenlänge des Dispersionsminimums von $\lambda_0 = 1,305$ µm. Der Fleckradius $W_0$ der Grundwelle wird gemäß

$$W_O^2 = 2 \int_0^\infty r^3 E^2(r)dr / \int_0^\infty r E^2(r)dr \qquad (3)$$

definiert, wobei E(r) das Grundwellenfeld als Funktion des Abstandes r von der Fasermitte m ist. Die Makrokrümmungsverluste sind für einen Krümmungsradius von 4,5 cm berechnet. Aus der Figur 2 erkennt man, daß für die gleichen Fleckradien, d. h. gleichen Spleißverluste die Krümmungsverluste bei der Faser mit Doppelstufenprofil des Kerns kleiner sind als die bei der Faser mit einfachem Stufenprofil. Bei $R_a$ = 1,5 und $R_\Delta$ = 0,3 betragen die Makrokrümmungsverluste nur ein Dreißigstel der entsprechenden Verluste bei $R_a$ = 1 oder $R_\Delta$ = 1. Kleine Krümmungsverluste werden im Bereich $0,2 \le R_\Delta \le 0,4$ erreicht.

Die Figur 3 zeigt die Makrokrümmungsverluste bei $\lambda$ = 1,55 µm als Funktion des Krümmungsradius $R_c$ für die Fasern mit einfachem Stufenprofil und Doppelstufenprofil des Kerns. Ebenso wie in der Figur 2 werden hier der Fleckradius $W_0$ bei $\lambda$ = 1,55 µm und die Wellenlänge des Dispersionsminimums $\lambda_0$ auch wieder auf 5,05 µm bzw. 1,305 µm eingestellt. Der Grund für eine Abnahme der Makrokrümmungsverluste ist die Vergrößerung der effektiven Brechzahl der Grundwelle durch den zweiten Bereich ($K_2$) des Kerns. Die Makrokrümmungsverluste werden hauptsächlich durch die Differenz zwischen effektiver Brechzahl der Grundwelle und Brechzahl des äußeren Mantels bestimmt.

Die Spleißverluste sind vom Fleckradius $W_0$, und die Krümmungsverluste vom Fleckradius-Parameter $W_\infty$ abhängig, wobei $W_\infty$ gemäß

$$W_\infty^2 = \frac{2}{k^2 n_0 (n_e - n_0)} \qquad (4)$$

definiert ist. Dabei ist $n_e$ die effektive Brechzahl der Grundwelle, $n_0$ ist die Brechzahl des äußeren Mantels und k die Wellenzahl im Vakuum. Um Spleiß- und Krümmungsverluste gering zu halten, muß das Verhältnis $W_\infty/W_0$ so klein wie möglich sein.

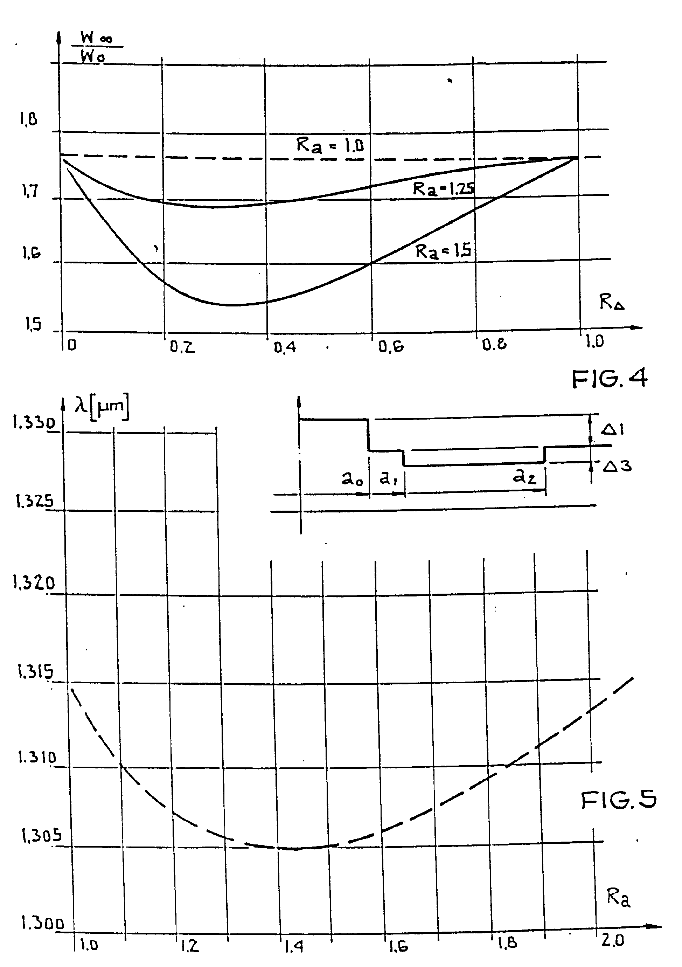

Die Figur 4 zeigt das Verhältnis $W_\infty/W_0$ bei $\lambda$ = 1,55 µm als Funktion von $R_\Delta$ mit $R_a$ als Parameter für einen Fleckradius $W_0$ = 5,05 µm bei $\lambda$ = 1,55 µm und eine Wellenlänge des Dispersionsminimums von $\lambda_0$ = 1,305 µm. Ebenso wie in der Figur 2 nimmt $W_\infty/W_0$ zu, wenn $R_a$ kleiner wird. Für jeweils konstante Werte von $R_a$ werden im Bereich $0,2 < R_\Delta < 0,4$ minimale Werte von $W_\infty/W_0$ erreicht.

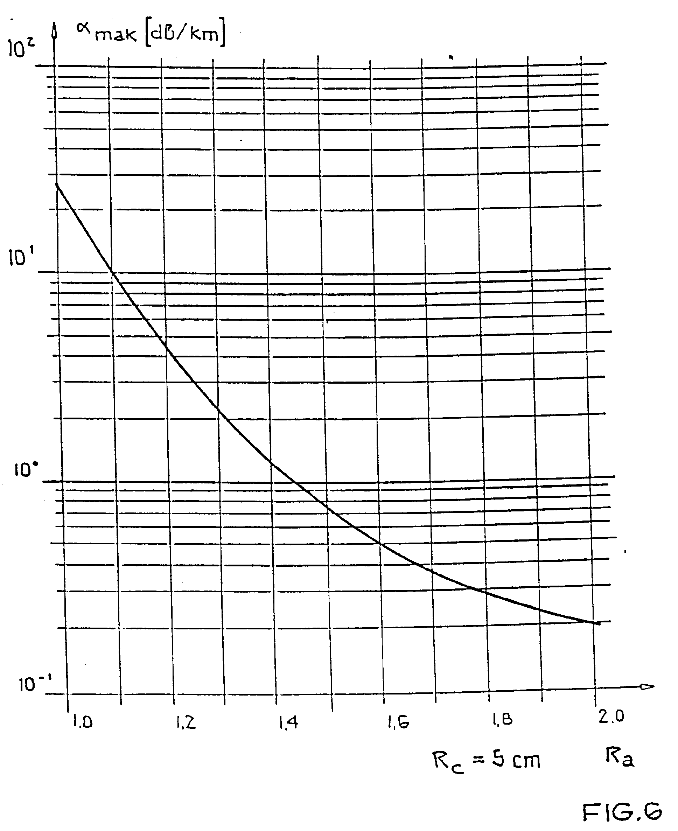

Um die Vorformherstellung nach dem MCVD-Verfahren zu vereinfachen, kann man in äußeren Bereich des Kerns das Quarzlgas mit Fluor- bzw. Germanium-Dotierung auch durch reines Quarzglas ersetzen. Die Figur 5 zeigt das Brechzahlprofil dieses Fasertyps. Die Wellenlänge des Dispersionsminimums $\lambda_0$ und die Makrokrümmungsverluste bei $\lambda$ = 1,55 µm für die Faser mit $\Delta_1$ = 0,265 %, $\Delta_2$ = 0, $\Delta_3$ = 0,098 % und $a_0$ = 4,0 µm sind auch in der Figur 5 bzw. in der Figur 6 als Funktion von $R_a$ aufgetragen. Diese Faser liegt mit $R_\Delta$ = 0,27 in dem Bereich, in welchem die Makrokrümmungsverluste minimale Werte erreichen. Hier wurde ein Krümmungsradius von 5 cm angenommen. Es läßt sich aus diesen Figuren auch entnehmen, daß der zweite Bereich des Kerns die Makrokrümmungsverluste drastisch reduzieren und gleichzeitig $\lambda_0$ verschieben kann.

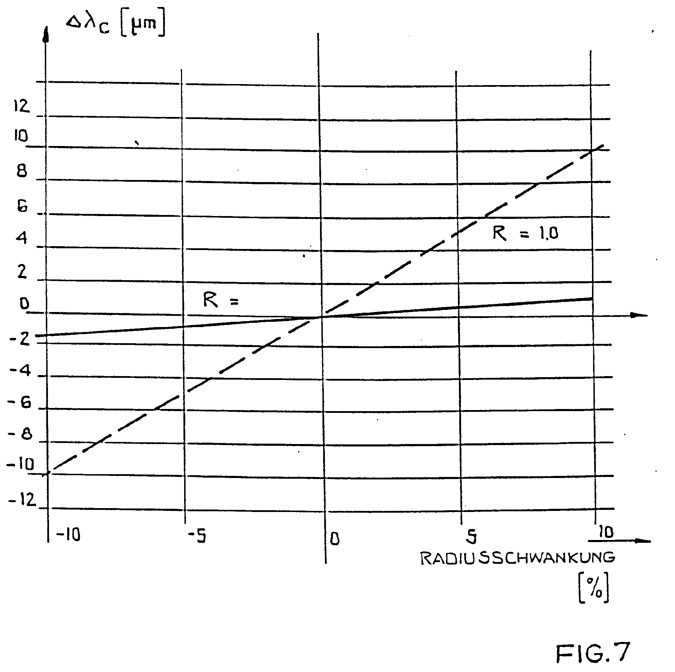

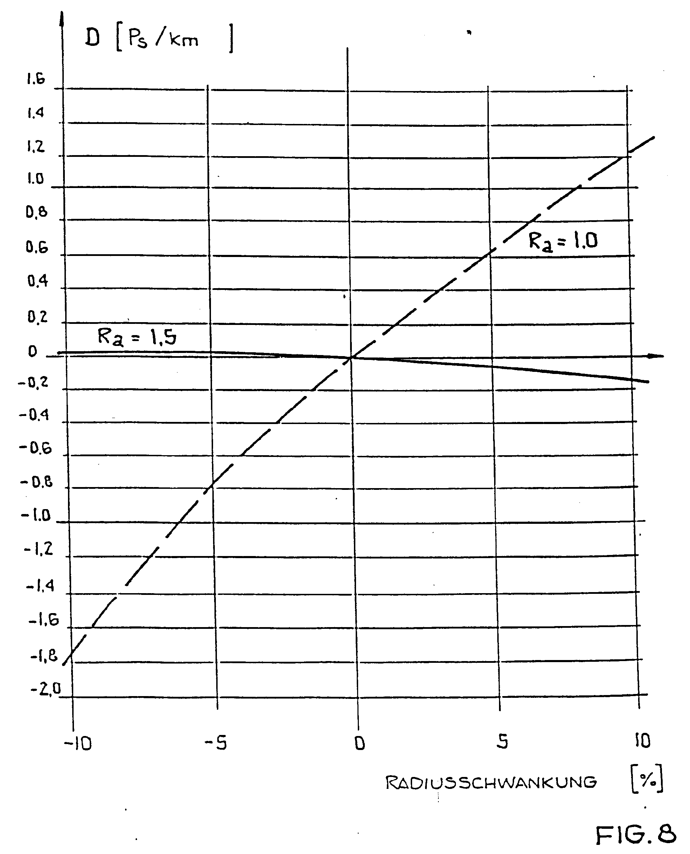

Die Faser mit abgesenkter Mantelbrechzahl und Doppelstufenprofil des Kerns bietet weitere wichtige Vorteile. Sie ist viel unempfindlicher gegenüber bestimmten Parameterschwankungen als die Faser mit einfachem Stufenprofil. Die Figuren 7 und 8 zeigen den Einfluß von Änderungen des Kernradius $a_1$ auf die Grenzwellenlänge der $LP_{11}$-Welle bzw. die Dispersionskoeffizienten für die Faser in der Figur 5. Hier wurde die Wellenlänge des Dispersionsminimums $\lambda_0$ auf etwa 1,305 µm eingestellt, indem entsprechende Kernradien gewählt wurden. Man erkannt, daß Kernradiusschwankungen bei der Faser mit einfachem Stufenprofil des Kerns sich stärker auswirken. Kernradiusschwankungen bei der Faser mit abgesenkter Mantelbrechzahl und Doppelstufenprofil des Kerns wirken sich längst nicht so drastisch aus. So verschiebt eine fünfprozentige Veränderung des Kernradius die $LP_{11}$-Grenzwellenlänge für $R_a$ = 1 um 0,05 µm, aber für $R_a$ =1,5 nur um 0,007 µm. Bei der Faser mit abgesenkter Mantelbrechzahl und Doppelstufenprofil des Kerns werden also die Genauigkeitsanforderungen bei der Herstellung reduziert, so daß diese Faser leichter hergestellt werden kann. Darüber hinaus werden bei der Faser mit abgesenkter Mantelbrechzahl und Doppelstufenprofil des Kerns die Dämpfungsverluste durch Absorption und Streuung aufgrund der Feldausdehnung in den äußeren Bereich des Kerns niedriger ausfallen.

**Patentansprüche**

1. Lichtwellenleiter mit einem Kern (K) und einem Mantel (M), bei dem der Kern (K) einen inneren Bereich ($K_1$) mit höherer konstanter Brechzahl sowie einen ihn umschließenden Bereich ($K_2$) mit niedrigerer aber

ebenfalls konstanter Brechzahl aufweist, und bei dem ferner der Mantel (M) in seinem inneren den Kern (K) umschließenden Bereich ($M_1$) eine Brechzahlabsenkung aufweist, in der die Brechzahl wiederum konstant und außerdem die niedrigste des gesamten Brechzahlverlaufs ist, <u>dadurch gekennzeichnet, daß das</u> Radienverhältnis $R_a$ der beiden Kernbereiche $a_1/a_0$ zwischen 1,1 und 1,8, vorzugsweise zwischen 1,3 und 1,6 liegt, mit $a_0$ als Radius des Kernbereiches ($K_1$) mit höherer Brechzahl und $a_1$ als Radius des Kernbereiches ($K_2$) mit niedrigerer Brechzahl.

2. Lichtwellenleiter nach Anspruch 1, <u>dadurch gekennzeichnet,</u> daß $R_\Delta$ zwischen 0,1 und 0,7 liegt, wobei $R_\Delta$ = $\Delta/(\Delta_1 + \Delta_3)$ ist, wobei $\Delta$ die Brechzahldifferenz zwischen der mittleren und der niedrigsten Brechzahl des Kernes (K), $\Delta_1$ die Brechzahldifferenz zwischen der maximalen Brechzahl des Kernes (K) und der maximalen Brechzahl des Mantels (M) und $\Delta_3$ die Brechzahldifferenz zwischen der maximalen Brechzahl des Mantels (M) und der niedrigsten Brechzahl des Mantels (M) ist.

3. Lichtwellenleiter nach Anspruch 2, <u>dadurch gekennzeichnet,</u> daß das $R_\Delta$ zwischen 0,2 und 0,4 liegt.

4. Lichtwellenleiter nach Anspruch 2 oder 3, <u>dadurch gekennzeichnet,</u> daß das $R_\Delta$ ungefähr 0,3 ist.

5. Lichtwellenleiter nach Anspruch 1 oder einem der folgenden, <u>dadurch gekennzeichnet,</u> daß $R_a$ ungefähr 1,45 ist.

## Claims

1. Optical fibre having a core (K) and a cladding (M), in which the core (K) has an inner region ($K_1$) with a higher constant refractive index and a region ($K_2$) which surrounds it and has a lower, but likewise constant, refractive index, and in which, furthermore, the cladding (M) has a drop in refractive index in its inner region ($M_1$) surrounding the core (K), in which the refractive index is once again constant and, moreover, the lowest of the overall variation in refractive index, characterized in that the radius ratio $R_a$ of the two core regions $a_1/a_0$ is between 1.1 and 1.8, preferably between 1.3 and 1.6, where $a_0$ is the radius of the core region ($K_1$) of higher refractive index and $a_1$ is the radius of the core region ($K_2$) of lower refractive index.

2. Optical fibre according to Claim 1, characterized in that $R_\Delta$ is between 0.1 and 0.7, it being the case that $R_\Delta = \Delta_-/(\Delta_1 + \Delta_3)$, $\Delta_-$ being the difference in refractive index between the middle and the lowest refractive index of the core (K), $\Delta_1$ being the difference in refractive index between the maximum refractive index of the core (K) and the maximum refractive index of the cladding (M), and $\Delta_3$ being the difference in refractive index between the maximum refractive index of the cladding (M) and the lowest refractive index of the cladding (M).

3. Optical fibre according to Claim 2, characterized in that $R_\Delta$ is between 0.2 and 0.4.

4. Optical fibre according to Claim 2 or 3, characterized in that $R_\Delta$ is approximately 0.3.

5. Optical fibre according to Claim 1 or one of the following claims, characterized in that $R_a$ is approximately 1.45.

## Revendications

1. Guide d'ondes lumineuses comportant un coeur (K) et une gaine (M), dans lequel le coeur (K) présente une zone intérieure ($K_1$) d'indice de réfraction constant plus élevé ainsi qu'une zone ($K_2$), qui l'entoure, d'indice de réfraction plus faible mais également constant, et dans lequel en outre la gaine (M) présente, dans sa zone intérieure ($M_1$) entourant le noyau (K), un abaissement de l'indice de réfraction selon lequel l'indice de réfraction est à nouveau constant et en outre le plus faible de toute la courbe de l'indice de réfraction, caractérisé par le fait que le rapport ($R_a$) des rayons $a_1/a_0$ des deux zones des coeurs vaut entre 1,1 et 1,8, de préférence entre 1,3 et 1,6, $a_0$ étant le rayon de la zone ($K_1$ du coeur d'indice de réfraction plus élevé et $a_1$ étant le rayon de la zone ($K_2$) du coeur d'indice de réfraction plus faible.

2. Guide d'ondes lumineuses selon la revendication 1, caractérisé par le fait que $R_\Delta$ vaut entre 0,1 et 0,7,

avec $R_\Delta = \Delta_-/(\Delta_1 + \Delta_3)$, $\Delta_-$ étant la différence d'indice de réfraction entre l'indice de réfraction moyen et l'indice de réfraction le plus faible du coeur (K), $\Delta_1$ étant la différence d'indice de réfraction entre l'indice de réfraction maximal du coeur (K) et l'indice de réfraction maximal de la gaine (M) et $\Delta_3$ étant la différence d'indice de réfraction entre l'indice de réfraction maximal de la gaine (M) et l'indice de réfraction le plus faible de la gaine (M).

3. Guides d'ondes lumineuses selon la revendication 2, caractérisé par le fait que $R_\Delta$ vaut entre 0,2 et 0,4.

4. Guide d'ondes lumineuses selon la revendication 2 ou 3, caractérisé par le fait que $R_\Delta$ vaut environ 0,3.

5. Guide d'ondes lumineuses selon la revendication 1 ou l'une des suivantes, caractérisé par le fait que $R_a$ vaut environ 1,45.

FIG.1

FIG.2

FIG. 3

FIG.4

FIG.5

$\alpha_{mak}$ [dB/km]

$R_c = 5$ cm    $R_a$

FIG.6

FIG.7

FIG.8